# EUROPÄISCHE PATENTSCHRIFT

(11) **EP 4 139 758 B1**
(45) Veröffentlichungstag und Bekanntmachung des Hinweises auf die Patenterteilung: **25.06.2025**
(21) Anmeldenummer: 22708347.4
(22) Anmeldetag: 26.01.2022
(51) Int. Cl.: G05B 19/4155, G05B 19/4069

(54) **VERFAHREN UND VORRICHTUNG ZUR AUTOMATISCHEN ERMITTLUNG VON BEARBEITUNGSPARAMETERN FÜR EINEN BEARBEITUNGSPROZESS**
METHOD AND DEVICE FOR AUTOMATICALLY DETERMINING MACHINING PARAMETERS FOR A MACHINING PROCESS
PROCÉDÉ ET DISPOSITIF DE DÉTERMINATION AUTOMATIQUE DES PARAMÉTRÉS D'USINAGE POUR UN PROCÉDÉ D'USINAGE

(30) Priorität: 27.01.2021 EP 21153696
(43) Veröffentlichungstag der Anmeldung: 01.03.2023
(73) Patentinhaber: FRONIUS INTERNATIONAL GmbH, 4643 Pettenbach (AT)
(72) Erfinder: ENNSBRUNNER, Helmut, 4643 Pettenbach (AT); ANGERMAYR, Daniel, 4643 Pettenbach (AT)
(74) Vertreter: SONN Patentanwälte GmbH & Co KG
(86) Internationale Anmeldenummer: PCT/EP2022/051661
(87) Internationale Veröffentlichungsnummer: WO 2022/161963

(56) Entgegenhaltungen:
- EP-A1- 3 176 658
- DE-A1- 102009 020 246
- DE-A1- 19 722 425
- DE-U1- 202005 011 429

## Beschreibung

Die Erfindung betrifft ein Verfahren zur automatischen Ermittlung von Bearbeitungsparametern für einen Bearbeitungsprozess, bei dem ein Bearbeitungskopf entlang einer Bearbeitungsbahn über zumindest ein zu bearbeitendes Werkstück geführt wird, und in Abhängigkeit der jeweiligen Position entlang der Bearbeitungsbahn bestimmte Bearbeitungsparameter aus gespeicherten Bearbeitungsparametern anhand vorgegebener Bedingungen zur Bearbeitung des zumindest einen Werkstücks ausgewählt werden.

Weiters betrifft die Erfindung eine Vorrichtung zur Bearbeitung eines Werkstücks mit einem Bearbeitungskopf entlang einer Bearbeitungsbahn mit bestimmten Bearbeitungsparametern.

Unter Bearbeitungsprozesse fallen insbesondere Fügeprozesse, wie zum Beispiel Schweiß- oder Lötprozesse, bei welchen Werkstücke miteinander verbunden oder Werkstücke beschichtet werden, aber auch Oberflächenbehandlungsprozesse, wie zum Beispiel Plasmabearbeitungsprozesse, bei welchen Werkstücke mit Plasma bearbeitet bzw. gereinigt werden, um diese auf nachfolgende Bearbeitungen vorzubereiten. Beispielsweise kann die Oberfläche von Werkstücken vor dem Lackieren mit Plasma bearbeitet werden, um die Oberfläche von Rückständen zu befreien und/oder die Haftung der Lackschicht zu verbessern. Auch Prozesse, bei welchen Werkstücke geschnitten werden, sind denkbar.

Es sind Verfahren bekannt, welche automatisch Bearbeitungsparameter für Bearbeitungsprozesse für bestimmte Aufgaben ermitteln, indem ideale Bearbeitungsparameter herangezogen werden, welche davor von Experten für diese Aufgabe bestimmt wurden. Somit braucht der Anwender des Bearbeitungsprozesses nicht mehr über Expertenwissen zu verfügen, ohne dass die Qualität des Bearbeitungsergebnisses leidet. Die vorgegebenen Bedingungen, anhand derer bestimmte Bearbeitungsparameter aus gespeicherten Bearbeitungsparametern zur Durchführung des jeweiligen Bearbeitungsprozesses ausgewählt werden, sind von der jeweiligen Bearbeitungsaufgabe abhängig und müssen vor dem Bearbeitungsprozess von entsprechenden Experten definiert oder können auch während des Bearbeitungsprozesses ermittelt werden. Beispielsweise kann es bei einer sichtbaren Schweißnaht neben den mechanischen Eigenschaften der Schweißnaht auch darauf ankommen, dass die Schweißnaht möglichst schmal und regelmäßig ausgebildet ist, wohingegen es bei einer nicht sichtbaren Schweißnaht mehr auf die Festigkeit der Verbindung und somit auf eine ausreichende Einbrandtiefe ankommen kann. Die Bedingungen zur Auswahl der Bearbeitungsparameter für den Bearbeitungsprozess werden also in Abhängigkeit der jeweiligen Aufgabe anders ausfallen und entsprechend definiert werden.

Beispielsweise beschreibt die EP 3 484 650 B1 ein Verfahren zur Festlegung von Schweißparametern für einen Schweißprozess, bei dem ohne Zutun von Experten Schweißprozesse entlang beliebiger Schweißbahnen parametriert werden können, indem die Schweißparameter für den jeweiligen Schweißprozess anhand von idealen Schweißparametern, welche unter Testbedingungen an Testwerkstücken aufgenommen und gespeicherten wurden, durch Interpolation festgelegt werden. Somit können die Schweißparameter für bestimmte Werkstückgeometrien automatisch aus vorher definierten idealen Schweißparametern zusammengefügt werden, ohne dass der Schweißer diesbezüglich tätig werden muss. Dabei wurden die idealen Schweißparameter an den Testwerkstücken für eine bestimmte zu lösende Schweißaufgabe festgelegt.

Die EP 3 566 806 A1 beschreibt ein Schweißverfahren, bei welchem für die Erzielung bestimmter Qualitätskriterien automatisch optimale Schweißparameter, welche anhand von Testschweißungen an Testwerkstücken ermittelt wurden, für den Schweißprozess verwendet werden. Die Ermittlung der optimalen Schweißparameter für die jeweilige Schweißaufgabe erfolgt über das Optimum eines berechneten Gütefunktionals über die jeweiligen optimalen Schweißparameter der Testschweißungen.

Die DE 10 2009 020 246 A1 beschreibt ein Verfahren und eine Maschine zur zerspanenden Bearbeitung, wobei in Abhängigkeit der jeweiligen Position entlang der Bearbeitungsbahn bestimmte Bearbeitungsparameter ausgewählt werden. Durch die Analyse des Schwingungsverhaltens des Werkstücks können Störungen erkannt und Bearbeitungsparameter für nachfolgende Bearbeitungsprozesse an identischen Werkstücken korrigiert bzw. geregelt werden.

Die EP 3 176 658 A1 beschreibt ein Verfahren zur Steuerung einer Werkzeugmaschine, wobei die Steuerungseinheit dazu ausgebildet ist, einen werkstückspezifischen Bearbeitungsprozess durchzuführen. Es ist möglich, die Einhaltung von definierbaren Grenzwerten für Prozessparameter zu überwachen und gegebenenfalls eine Warnung auszugeben oder die Bearbeitung zu stoppen.

Bei bekannten Verfahren oder Vorrichtungen der gegenständlichen Art wird nicht berücksichtigt, dass ideale Bearbeitungsparameter nicht immer realisiert werden können. Beispielsweise können bei einem Roboterschweißsystem nicht immer bestimmte Anstellwinkel des Schweißbrenners aufgrund der Geometrie des Werkstücks, der Spannvorrichtungen, etc. realisiert werden oder kann die gewünschte Bearbeitungsgeschwindigkeit oder Schweißgeschwindigkeit nicht immer erreicht werden. Auch ein langes Schlauchpaket oder dessen Verlegung kann dazu führen, dass bestimmte ideale Schweißparameter nicht realisiert werden können.

Die Aufgabe der vorliegenden Erfindung besteht darin, ein oben genanntes Verfahren zur automatischen Ermittlung von Bearbeitungsparametern für einen Bearbeitungsprozess und eine entsprechende Bearbeitungsvorrichtung zu schaffen, durch welche die Bearbeitungsparameter noch besser an die jeweiligen Gegebenheiten angepasst werden, sodass auch ohne Expertenwissen des Anwenders optimale Bearbeitungsergebnisse und somit höchste Bearbeitungsqualitäten bei der Bearbeitung der Werkstücke erzielt werden können. Nachteile bekannter Verfahren und Vorrichtungen sollen vermieden oder zumindest reduziert werden.

Gelöst wird die erfindungsgemäße Aufgabe dadurch, dass Grenzwerte für die Bearbeitungsparameter für den durchzuführenden Bearbeitungsprozess ermittelt und vorzugsweise gespeichert werden, und unter Berücksichtigung dieser Grenzwerte neue Bearbeitungsparameter für den durchzuführenden Bearbeitungsprozess festgelegt werden. Erfindungsgemäß wird das Verfahren zur automatischen Ermittlung von neuen Bearbeitungsparametern um eine zusätzliche Dimension oder Möglichkeit der Berücksichtigung von Grenzwerten für Bearbeitungsparameter erweitert. Dadurch kann der Automatisierungsgrad des Bearbeitungsprozesses noch weiter erhöht werden, indem derartige Grenzwerte für Bearbeitungsparameter bei der automatischen Ermittlung der neuen Bearbeitungsparameter berücksichtigt werden. Die Grenzwerte für die Bearbeitungsparameter können real vor oder während des Bearbeitungsprozesses oder auch virtuell durch Simulation ermittelt werden. Beispielweise handelt es sich bei den Grenzwerten für Bearbeitungsparameter um minimale und bzw. oder maximale Stellgrößen bestimmter Bearbeitungsparameter, welche auch entlang der Bearbeitungsbahn variieren können, da sie beispielsweise von der Werkstückgeometrie, Geometrie und jeweiligen Stellung der Bearbeitungsvorrichtung oder des Bearbeitungsroboters, etc. abhängig sind. Werden bestimmte Grenzwerte für bestimmte Bearbeitungsparameter festgestellt, dann werden diese Grenzwerte bei der Ermittlung der Bearbeitungsparameter berücksichtigt und neue Bearbeitungsparameter festgelegt. Beispielsweise können die neuen Bearbeitungsparameter dem jeweiligen Grenzwert für den Bearbeitungsparameter entsprechen oder durch einen anderen Bearbeitungsparameter bzw. mehrere Bearbeitungsparameter ersetzt werden, sodass der Bearbeitungsprozess ohne Qualitätseinbußen für das Bearbeitungsergebnis und ohne Überschreitung oder Unterschreitung von Grenzwerten für die Bearbeitungsparameter durchgeführt werden kann. Werden die Grenzwerte für Bearbeitungsparameter nicht erreicht oder angenähert, so wird der Bearbeitungsprozess mit den bestimmten Bearbeitungsparametern als neue Bearbeitungsparameter durchgeführt. Werden Grenzwerte erreicht oder angenähert, so werden geänderte Bearbeitungsparameter als neue Bearbeitungsparameter festgelegt, und der Bearbeitungsprozess ohne Grenzwertverletzung durchgeführt. Zur Berücksichtigung der Grenzwerte für Bearbeitungsparameter müssen diese ermittelt oder Algorithmen zur Ermittlung derselben hinterlegt sein. Wenn an einer bestimmten Position der Bearbeitungsbahn ein Grenzwert eines bestimmten Bearbeitungsparameters auftritt, kann bereits vor dieser Position entlang der Bearbeitungsbahn eine Berücksichtigung des Grenzwerts notwendig sein. Wenn beispielsweise eine Spannvorrichtung für das Werkstück an der Stelle der Spannvorrichtung einen bestimmten Anstellwinkel des Bearbeitungskopfs unmöglich macht, wird der Anstellwinkel des Bearbeitungskopfes bereits ein Stück vor der Spannvorrichtung geändert werden und auch ein Stück nach der Spannvorrichtung wieder in die optimale Lage gebracht werden. Im Bereich der Spannvorrichtung wird also der Bearbeitungsprozess mit den neuen Bearbeitungsparametern, welche die Grenzwerte berücksichtigen, durchgeführt. Weiter weg von der Spannvorrichtung entsprechen die neuen Bearbeitungsparameter des Bearbeitungsprozesses den bestimmten Bearbeitungsparametern. Bei einem Schweißverfahren als Bearbeitungsprozess können beispielsweise Grenzwerte für den Schweißstrom, die Schweißleistung, die Anstiegsgeschwindigkeit des Schweißstroms oder die Schweißspannung vorliegen, welche durch die Schweißstromquelle festgelegt werden oder sich auch durch die Lage des Schlauchpakets ergeben können. Grenzwerte für den Anstellwinkel oder des Arbeitswinkels des Schweißbrenners sowie die Verdrehung des Schlauchpakets können durch die Geometrie des Werkstücks bedingt sein. Durch die Vorschubeinheit für den Schweißdraht wird auch zumindest ein oberer Grenzwert für die Fördergeschwindigkeit des Schweißdrahts definiert sein.

Vorzugsweise werden vor der Auswahl der bestimmten Bearbeitungsparameter für den durchzuführenden Bearbeitungsprozess ideale Bearbeitungsparameter mit Testbearbeitungsprozessen an mehreren Testwerkstücken entlang Testbearbeitungsbahnen unter jeweils einer bestimmten Lage und Anordnung der Testwerkstücke ermittelt und gespeichert, und die bestimmten Bearbeitungsparameter an der jeweiligen Position entlang der Bearbeitungsbahn für den durchzuführenden Bearbeitungsprozess aus den gespeicherten idealen Bearbeitungsparameter für die bestimmten Lagen und Anordnungen der Testwerkstücke ermittelt. Dabei kann die Lage und Anordnung der Testwerkstücke und auch die aktuelle Lage und Anordnung des Werkstücks in Bezug auf den Erdbeschleunigungsvektor und einen bestimmten Tangentialvektor der Testbearbeitungsbahn bzw. Bearbeitungsbahn gesetzt werden. Dies stellt ein bevorzugtes Verfahren zur Festlegung von Bearbeitungsparametern für einen Bearbeitungsprozess dar, wie es beispielsweise in der bereits oben genannten EP 3 484 650 B1 für einen Schweißprozess beschrieben wird.

Die bestimmten Bearbeitungsparameter an der jeweiligen Position entlang der Bearbeitungsbahn für den durchzuführenden Bearbeitungsprozess in Abhängigkeit der aktuellen Lage und Anordnung des zumindest einen Werkstücks können beispielsweise einfach und rasch durch Interpolation der gespeicherten idealen Bearbeitungsparameter ermittelt werden. Beispielsweise können die Schweißparameter beim Schweißen eines Rohres je nach Position des Schweißbrenners in Bezug auf das Rohr aus gespeicherten Werten für den Schweißprozess bei bestimmten Winkeln entlang des Umfangs des Rohres festgelegt und dazwischen interpoliert werden.

Gemäß einem Merkmal der Erfindung können die Grenzwerte für die Bearbeitungsparameter eingegeben und vorzugsweise gespeichert werden. Dies stellt die Möglichkeit dar, bei der Grenzwerte vom Anwender des Bearbeitungsprozesses definiert und eingegeben werden, sodass diese beim Ermitteln der Bearbeitungsparameter und Festlegen der neuen Bearbeitungsparameter berücksichtigt werden können. Die Eingabe der Grenzwerte kann natürlich auch von einer übergeordneten Stelle durchgeführt und an die Bearbeitungsvorrichtung übermittelt werden. Darüber hinaus können die Grenzwerte auch durch einen Bearbeitungsroboter, das Werkstück, den Bearbeitungsprozess etc. bestimmt sein und auch automatisch festgelegt bzw. eingegeben werden. Die Grenzwerte können in beliebigen Speichern, beispielsweise in der Schweißstromquelle, Datenbanken, etc. gespeichert sein.

Alternativ oder zusätzlich zur Eingabe können die Grenzwerte für die Bearbeitungsparameter auch vor der Durchführung des Bearbeitungsprozesses automatisch ermittelt und vorzugsweise gespeichert werden. Beispielsweise kann der Bearbeitungsprozess rechnerisch bzw. virtuell entlang der Bearbeitungsbahn durchlaufen und dabei festgestellt werden, welche Bearbeitungsparameter an welchen Positionen entlang der Bearbeitungsbahn in welcher Weise begrenzt werden. Beim sogenannten "offline"-Verfahren werden die Grenzwerte vor dem Bearbeitungsprozess ermittelt und für die spätere Berücksichtigung beim Bearbeitungsprozess vorzugsweise gespeichert. Dabei können suboptimale Bearbeitungsparameter erkannt und alternative Bearbeitungsparameter, welche sich für die Bearbeitung besser eignen, aufgefunden und als neue Bearbeitungsparameter für den durchzuführenden Bearbeitungsprozess festgelegt werden. Diese alternativen Bearbeitungsparameter können beispielsweise aus Testschweißungen, bei denen Grenzwerte berücksichtigt werden, ermittelt werden.

Alternativ oder zusätzlich zu den beiden oben genannten Methoden können die Grenzwerte für die Bearbeitungsparameter auch während der Durchführung des Bearbeitungsprozesses automatisch ermittelt werden. Dabei werden die Grenzwerte der Bearbeitungsparameter in Echtzeit oder quasi Echtzeit mit geringen Verzögerungen beim Bearbeitungsprozess ermittelt und berücksichtigt. Die Frequenz der Ermittlung entlang der Bearbeitungsbahn wird von der jeweiligen Rechenleistung beschränkt. Dementsprechend kann die Bearbeitungsgeschwindigkeit beim sogenannten "online"-Verfahren unter Umständen begrenzt sein, wohingegen das "offline"-Verfahren bzw. die Simulation rascher durchgeführt werden kann. Für Dokumentationszwecke können die während der Durchführung des Bearbeitungsprozesses ermittelten Grenzwerte für die Bearbeitungsparameter in Abhängigkeit der Position entlang der Bearbeitungsbahn auch gespeichert werden. Notwendig ist die Speicherung der Grenzwerte jedoch beim "online"-Verfahren nicht.

Zusätzlich zu den Grenzwerten für die Bearbeitungsparameter können alternative Bearbeitungsparameter gespeichert werden, welche beim Erreichen der Grenzwerte für die Bearbeitung als neue Bearbeitungsparameter für den durchzuführenden Bearbeitungsprozess festgelegt werden. Die alternativen Bearbeitungsparameter sind neben den optimalen Bearbeitungsparameter Alternativen zu diesen optimalen Bearbeitungsparametern für den Bearbeitungsprozess unter Einhaltung der Grenzwerte für die Bearbeitungsparameter, welche bei Erreichen der Grenzwerte als neue Bearbeitungsparameter festgelegt werden. Beispielsweise kann es bei einem Schweißprozess notwendig sein, mehrere Schweißparameter zu ändern, wenn der Arbeitswinkel des Schweißbrenners zum Werkstück nicht mehr eingehalten werden kann.

Gemäß einem weiteren Merkmal der Erfindung kann eine Warnung ausgegeben und bzw. oder eine Information gespeichert werden, wenn ein bestimmter Bearbeitungsparameter für den durchzuführenden Bearbeitungsprozess sich einem Grenzwert für die Bearbeitungsparameter annähert oder einen Grenzwert für die Bearbeitungsparameter erreicht. Das Annähern oder Erreichen von Grenzwerten für Bearbeitungsparameter kann für den Anwender während des Bearbeitungsprozesses oder die nachfolgende Qualitätskontrolle des bearbeiteten Werkstücks von Bedeutung sein. Wie früh vor dem Erreichen eines Grenzwerts, also beim Annähern eines Grenzwerts eine Warnung ausgegeben oder eine Information gespeichert wird, ist vom jeweiligen Bearbeitungsparameter und den jeweiligen Gegebenheiten des Bearbeitungsprozesses abhängig und kann stark variieren. Beispielsweise kann die Warnung dann ausgegeben werden, wenn 90% eines maximalen Winkels als Faktor eines Grenzwerts oder wenn 10° vor einem maximalen Winkel als Absolutwert vor dem Grenzwert erreicht werden. Die Warnung während des Bearbeitungsprozesses kann beispielsweise akustisch, optisch oder auch mechanisch direkt beim Bearbeitungsprozess oder an eine übergeordnete Zentrale erfolgen.

Bei Annähern oder Erreichen zumindest eines Grenzwerts für einen Bearbeitungsparameter als bestimmter Bearbeitungsparameter für den durchzuführenden Bearbeitungsprozess kann dieser zumindest eine Grenzwert für einen Bearbeitungsparameter oder angenäherte Grenzwert für einen Bearbeitungsparameter oder gespeicherte alternative Bearbeitungsparameter als neuer Bearbeitungsparameter für den durchzuführenden Bearbeitungsprozess ausgewählt werden. Diese Methode stellt eine einfache Berücksichtigung der Grenzwerte für Bearbeitungsparameter bei der automatischen Ermittlung von Bearbeitungsparametern für einen Bearbeitungsprozess dar, indem die Werte für die jeweiligen Bearbeitungsparameter einfach mit den Grenzwerten limitiert werden. Für manche, einfache Bearbeitungsprozesse kann dies ausreichen, um nicht an Bearbeitungsgrenzen zu stoßen und dennoch den Bearbeitungsprozess ohne Unterbrechung durchführen zu können. Beispielsweise kann ein Oberflächenbehandlungsprozess mittels eines Plasmastrahls auf eine bestimmte Bearbeitungsgeschwindigkeit limitiert werden, um das Bearbeitungsergebnis, beispielsweise die Reinigung der Oberfläche entlang der Bearbeitungsbahn, sicher zu erreichen. Bei einem Schweißprozess kann beispielsweise der Anstellwinkel des Schweißbrenners auf den maximal möglichen Anstellwinkel, also den oberen Grenzwert dieses Bearbeitungsparameters, beschränkt werden und es können die anderen Schweißparameter an diesen eingestellten Anstellwinkel angepasst werden. In vielen Fällen wird aber beim Erreichen eines Grenzwerts für einen Bearbeitungsparameter eine komplexere Änderung von mehreren Bearbeitungsparametern als neue Bearbeitungsparameter für den durchzuführenden Bearbeitungsprozess notwendig sein.

Vorteilhafterweise werden die Grenzwerte für die Bearbeitungsparameter bei der Auswahl der bestimmten Bearbeitungsparameter für den durchzuführenden Bearbeitungsprozess vor dem Bearbeitungsprozess berücksichtigt. Hierbei werden "offline" vor der Durchführung des Bearbeitungsprozesses die neuen Bearbeitungsparameter festgelegt und gegebenenfalls vorher noch einer Prüfung unterzogen. Dies kann real oder rechnerisch bzw. virtuell erfolgen.

Danach kann der durchzuführende Bearbeitungsprozess mit den bestimmten Bearbeitungsparametern simuliert werden und können die neuen Bearbeitungsparameter für den durchzuführenden Bearbeitungsprozess festgelegt werden, bevor der Bearbeitungsprozess wirklich durchgeführt wird.

Alternativ dazu können die gespeicherten Grenzwerte für die Bearbeitungsparameter auch bei der Auswahl der bestimmten Bearbeitungsparameter für den durchzuführenden Bearbeitungsprozess während des Bearbeitungsprozesses berücksichtigt werden und die neuen Bearbeitungsparameter für den durchzuführenden Bearbeitungsprozess festgelegt werden. Dabei werden also die neuen Bearbeitungsparameter "online" während des Bearbeitungsprozesses festgelegt.

Um zu verhindern, dass Werkstücke fehlerhaft bearbeitet werden, kann der Bearbeitungsprozess auch gestoppt werden, wenn die festgelegten neuen Bearbeitungsparameter um einen vorgegebenen Faktor und bzw. oder einen vorgegebenen Absolutbetrag von den bestimmten Bearbeitungsparametern ohne Berücksichtigung von Grenzwerten abweichen. Hierdurch kann eine Sicherheitsschranke eingeführt werden, um Ausschuss von Werkstücken zu verhindern bzw. vor der Durchführung des Bearbeitungsprozesses noch einmal auf die festgelegten neuen Bearbeitungsparameter Einfluss nehmen zu können.

Dabei kann bei Abweichung der festgelegten neuen Bearbeitungsparameter um den vorgegebenen Faktor und bzw. oder den vorgegebenen Absolutbetrag von den bestimmten Bearbeitungsparametern ohne Berücksichtigung von Grenzwerten auch eine Warnung an den Anwender der Bearbeitungsvorrichtung oder eine übergeordnete Zentrale ausgegeben und bzw. oder eine Information für Dokumentationszwecke gespeichert werden.

Ebenso wird die erfindungsgemäße Aufgabe durch eine oben genannte Vorrichtung zur Bearbeitung eines Werkstücks mit einem Bearbeitungskopf entlang einer Bearbeitungsbahn mit bestimmten Bearbeitungsparametern gelöst, welche zur Durchführung des oben genannten Verfahrens eingerichtet ist. Zu den dadurch erzielbaren Vorteilen wird auf die obige Beschreibung des Verfahrens zur Bearbeitung eines Werkstücks verwiesen. Die Vorrichtung kann durch allfällige Aufrüstung ohnedies vorhandener Komponenten, wie einer Steuervorrichtung oder dgl. einfach zur Durchführung des erfindungsgemäßen Verfahrens aufgerüstet werden. Die wesentlichen verfahrenstechnischen Merkmale können softwaremäßig implementiert werden.

Die vorliegende Erfindung wird anhand der beigefügten Zeichnungen näher erläutert. Darin zeigen:
- Fig. 1: eine schematische Darstellung einer Bearbeitungsvorrichtung zur Durchführung eines Verfahrens zur automatischen Ermittlung von Bearbeitungsparametern für einen Bearbeitungsprozess nach dem Stand der Technik;
- Fig. 2: eine schematische Darstellung einer Bearbeitungsvorrichtung zur Durchführung eines erfindungsgemäßen Verfahrens zur automatischen Ermittlung von Bearbeitungsparametern für einen Bearbeitungsprozess unter Berücksichtigung von Grenzwerten für die Bearbeitungsparameter;
- Fig. 3A: bis 3D Testwerkstücke mit Testbearbeitungsbahnen in verschiedenen Lagen in Bezug auf den Erdbeschleunigungsvektor zur Ermittlung idealer Bearbeitungsparameter;
- Fig. 4: ein Ausführungsbeispiel der Festlegung von neuen Bearbeitungsparametern anhand eines Schweißprozesses unter Berücksichtigung von Grenzwerten der Schweißgeschwindigkeit; und
- Fig. 5: ein weiteres Ausführungsbeispiel der Festlegung von neuen Bearbeitungsparametern anhand eines Schweißprozesses unter Berücksichtigung von Grenzwerten des Anstellwinkels des Schweißbrenners zum Werkstück.

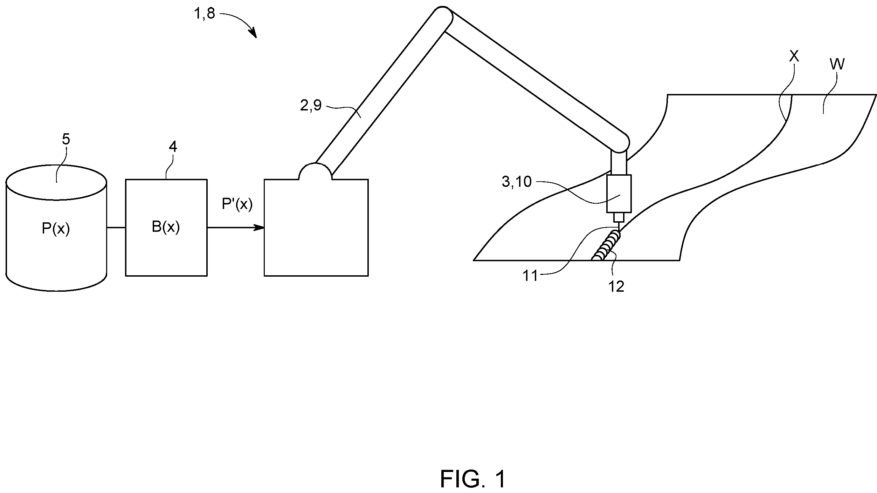

Fig. 1 zeigt eine schematische Darstellung einer Bearbeitungsvorrichtung 1 zur Durchführung eines Verfahrens zur automatischen Ermittlung von bestimmten Bearbeitungsparametern P'(x) für einen Bearbeitungsprozess BP nach dem Stand der Technik. Die Bearbeitungsvorrichtung 1 beinhaltet einen Bearbeitungsroboter 2, an dem ein Bearbeitungskopf 3, beispielsweise ein Schweißbrenner 10, befestigt ist. Während des Bearbeitungsprozesses BP wird der Bearbeitungskopf 3 entlang einer Bearbeitungsbahn X über zumindest ein zu bearbeitendes Werkstück W geführt. Zur Bearbeitung des Werkstücks W werden anhand vorgegebener Bedingungen B(x) aus einer Vielzahl möglicher Bearbeitungsparameter P(x), welche beispielsweise in einem Speicher 5 hinterlegt sind, in Abhängigkeit der jeweiligen Position x entlang der Bearbeitungsbahn X bestimmte Bearbeitungsparameter P'(x) ausgewählt, mit welchen das Werkstück W bearbeitet wird, um ein gewünschtes Bearbeitungsergebnis zu erzielen. Die jeweilige Bedingung B(x), welche wesentlich von der jeweiligen Bearbeitungsaufgabe abhängt, gibt der Steuervorrichtung 4 der Bearbeitungsvorrichtung 1 entsprechende Hinweise, anhand derer die bestimmten Bearbeitungsparameter P'(x) aus den gespeicherten Bearbeitungsparametern P(x) ausgewählt werden.

Bei der Bearbeitungsvorrichtung 1 kann es sich beispielsweise um eine Schweißvorrichtung 8 zur Durchführung eines Fügeprozesses oder Beschichtungsprozesses an einem Werkstück W handeln. Dabei wird ein Schweißbrenner 10 mit einem abschmelzenden Schweißdraht 11 an einem Schweißroboter 9 befestigt, mit dem zwei oder mehrere Werkstücke W miteinander verbunden oder auf einem Werkstück W eine Schicht aufgetragen werden kann. Das Ergebnis des Bearbeitungsprozesses BP ist in diesem Fall eine Schweißnaht 12 zwischen zwei oder mehreren zu verbindenden Werkstücken W oder eine Schweißraupe an der Oberfläche eines Werkstücks W. Weiters kann die Bearbeitungsvorrichtung 1 auch durch eine Vorrichtung zur Behandlung der Oberfläche eines Werkstücks W mit einem Plasmabrenner, eine Lackiervorrichtung, eine Schneidvorrichtung und vieles mehr, gebildet sein (nicht dargestellt). Je nach Bearbeitungsprozess unterscheidet sich das Ergebnis des Bearbeitungsprozesses BP entlang der Bearbeitungsbahn X.

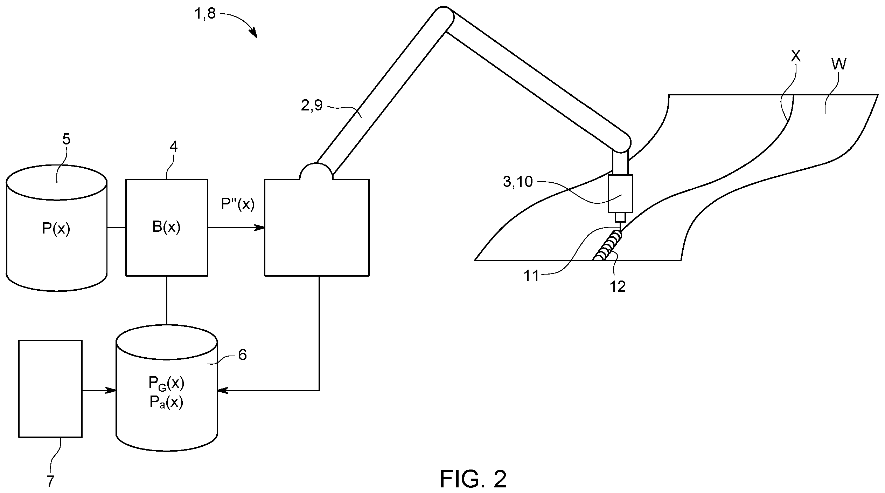

Fig. 2 zeigt eine schematische Darstellung einer Bearbeitungsvorrichtung 1 zur Durchführung eines erfindungsgemäßen Verfahrens zur automatischen Ermittlung von neuen

Bearbeitungsparametern P''(x) für einen Bearbeitungsprozess BP unter Berücksichtigung von Grenzwerten P_{G}(x) für die Bearbeitungsparameter P(x). Erfindungsgemäß werden nun Grenzwerte P_{G}(x) für die Bearbeitungsparameter P(x), beispielsweise obere Grenzwerte P_{G,o}(x) und unterer Grenzwerte P_{G,u}(x) beim durchzuführenden Bearbeitungsprozess BP ermittelt und beispielsweise in einer Datenbank 6 gespeichert, und diese gespeicherten Grenzwerte P_{G}(x) für die Bearbeitungsparameter P(x) bei der Auswahl der neuen Bearbeitungsparameter P"(x) für den durchzuführenden Bearbeitungsprozess BP berücksichtigt. Die Grenzwerte P_{G}(x) für die Bearbeitungsparameter P(x) können beispielsweise über eine Eingabevorrichtung 7 eingegeben und in der Datenbank 6 gespeichert werden. Ebenso können die Grenzwerte P_{G}(x) für die Bearbeitungsparameter P(x) vor der Durchführung des Bearbeitungsprozesses BP automatisch ermittelt und vorzugsweise gespeichert werden, beispielsweise durch virtuelles Durchlaufen des Bearbeitungsprozesses BP. Darüber hinaus können die Grenzwerte P_{G}(x) für die Bearbeitungsparameter P(x) auch während der Durchführung des Bearbeitungsprozesses BP automatisch ermittelt und eventuell gespeichert werden. Bei einem virtuellen bzw. rechnerischen Durchlaufen des Bearbeitungsprozesses BP werden beispielsweise auch Grenzwerte P_{G}(x) für die Bearbeitungsparameter P(x) berücksichtigt, welche durch Spannvorrichtungen oder dgl. verursacht werden.

Zusätzlich zu den Grenzwerten P_{G}(x) für die Bearbeitungsparameter P(x) können in der Datenbank 6 oder in einem Speicher an einem beliebigen Speicherort, alternative Bearbeitungsparameter Pₐ(x) gespeichert werden, welche im Falle des Annäherns oder Erreichens eines Grenzwerts P_{G}(x) für einen Bearbeitungsparameter P(x) als neue Bearbeitungsparameter P"(x) für den Bearbeitungsprozess BP festgelegt und verwendet werden. Bei den festgelegten neuen Bearbeitungsparametern P"(x) werden also die Grenzwerte P_{G}(x) berücksichtigt. Werden ermittelte Grenzwerte P_{G}(x) für die Bearbeitungsparameter P(x) nicht erreicht oder angenähert, wird der Bearbeitungsprozess BP mit den anhand der Bedingung B(x) ausgewählten, bestimmten Bearbeitungsparametern P'(x) als neue Bearbeitungsparameter (P"(x)) durchgeführt (siehe Fig. 1). Werden die Grenzwerte P_{G}(x) erreicht oder angenähert, so wird der Bearbeitungsprozess BP mit neuen Bearbeitungsparametern P''(x) durchgeführt, welche die Grenzwerte P_{G}(x) einhalten. In diesem Fall unterscheiden sich die neuen Bearbeitungsparameter (P''(x)) von den bestimmten Bearbeitungsparametern (P'(x)). Die neuen Bearbeitungsparameter (P''(x)) sind jedenfalls hinsichtlich der zu erzielenden Bearbeitungsqualität beim Bearbeitungsprozess als geeigneter oder optimal unter Einhaltung der Grenzwerte P_{G}(x) zu verstehen.

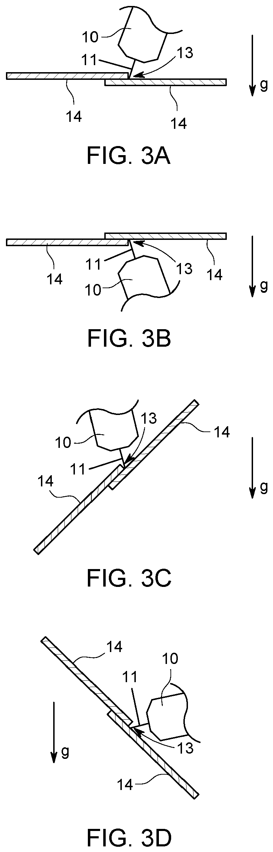

Fig. 3A bis 3D zeigen Testwerkstücke 14 mit Testschweißnähten 13 in verschiedenen Lagen in Bezug auf den Erdbeschleunigungsvektor g zur Ermittlung idealer Schweißparameter Pᵢ(x). Entsprechend Fig. 3A werden beispielsweise zuerst die idealen Schweißparameter Pᵢ(x) einer Überlappnaht in einer ersten Lage, hier in Wannenposition, erfasst und gespeichert. Dazu werden von einem Experten entsprechend der Schweißaufgabe die idealen Schweißparameter Pᵢ(x) während der Durchführung eines Testschweißprozesses ermittelt. Wird die Schweißaufgabe zufriedenstellend erfüllt und ist durch eine Änderung der eingestellten Werte keine Verbesserung hinsichtlich des Ergebnisses der Schweißaufgabe zu erwarten, werden die eingestellten Werte als ideale Schweißparameter Pᵢ(x) für eine Überlappnaht in Wannenposition abgespeichert. Fig. 3B zeigt die ebenen Testwerkstücke 14 in einer weiteren Lage, der Überkopfposition, Fig. 3C und Fig. 3D zeigen die Lagen der Testwerkstücke 14 mit einer 45° gekippten, horizontal angeordneten Testschweißbahn 13, für welche auch die idealen Schweißparameter Pᵢ(x) ermittelt und gespeichert werden. Bei den hier dargestellten geraden Testschweißbahnen 13 ist die Richtung des Tangentialvektors t gleich der Richtung der Testschweißbahn 13. Des Weiteren werden ideale Schweißparameter Pᵢ(x) für unterschiedliche Ausrichtungen der Testschweißbahn 13 in Bezug auf den Erdbeschleunigungsvektor g erfasst.

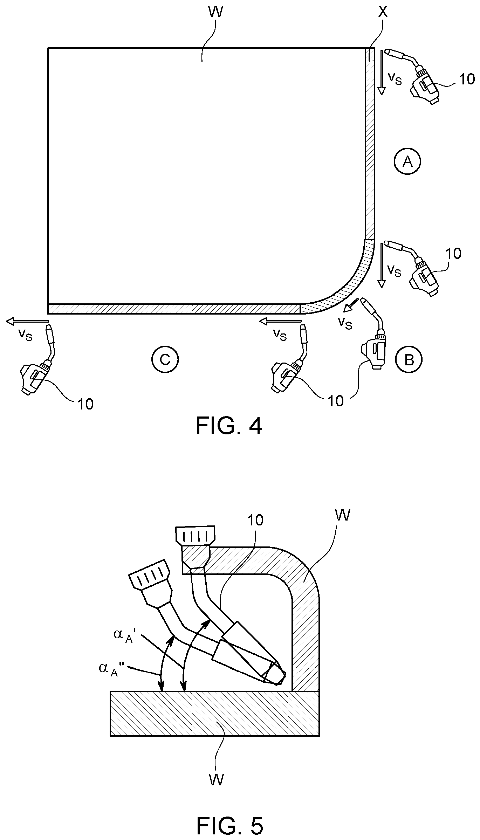

Fig. 4 zeigt ein Ausführungsbeispiel der Festlegung von neuen Schweißparametern als neue Bearbeitungsparameter P''(x) unter Berücksichtigung von Grenzwerten P_{G}(x) der Schweißgeschwindigkeit v_{S} beim Schweißen eines Werkstücks W. Der Schweißbrenner 10 wird zuerst mit einer Schweißgeschwindigkeit v_{S} entlang der Strecke A der Bearbeitungsbahn X in Form einer Fallnaht, also einer vertikalen Schweißbahn, geführt. In der Rundung im Bereich B der Bearbeitungsbahn X kann nur eine geringere Schweißgeschwindigkeit v_{S} ausgeführt werden, d.h. die Schweißgeschwindigkeit v_{S} weist einen oberen Grenzwert v_{s,G,o} auf, welcher als neuer Sollwert für die Schweißgeschwindigkeit ausgewählt wird. Andere Schweißparameter, wie der Schweißstrom, die Vorschubgeschwindigkeit des Schweißdrahts, etc. werden im Bereich B der Bearbeitungsbahn X entsprechend angepasst. Im Bereich B wird also eine verringerte Schweißgeschwindigkeit v_{S} als neuer Bearbeitungsparameter P"(x) für den durchzuführenden Schweißprozess festgelegt. Sobald der Bereich C, eine horizontal verlaufende Quernaht, der Bearbeitungsbahn X erreicht wurde, kann der Schweißprozess wieder mit einer höheren Schweißgeschwindigkeit v_{S} und den anderen zugehörigen Schweißparametern fortgesetzt werden.

Schließlich zeigt Fig. 5 ein Ausführungsbeispiel der Festlegung von geeigneten Schweißparametern unter Berücksichtigung von Grenzwerten des Anstellwinkels α_{A} des Schweißbrenners 10 zum Werkstück W. Aufgrund geometrischer Gegebenheiten des Werkstücks W oder der Werkstücke W ist die Einhaltung des normalerweise bestimmten Anstellwinkels α_{A}' des Schweißbrenners 10 zum Werkstück nicht möglich. Es existiert also ein Grenzwert für den Anstellwinkel α_{A,G} des Schweißbrenners 10, der als neuer Anstellwinkel α_{A}" des Schweißbrenners 10 für die Durchführung des Schweißprozesses verwendet wird, sodass ein Touchieren des Schweißbrenners 10 am Werkstück W sicher verhindert wird.

Die vorliegende Erfindung ermöglicht eine automatische Ermittlung neuer Bearbeitungsparameter unter Berücksichtigung von Grenzwerten für Bearbeitungsparametern, die eingegeben oder vor oder während dem Bearbeitungsprozess ermittelt werden können.

## Patentansprüche

1. Verfahren zur automatischen Ermittlung von Bearbeitungsparametern (P'(x)) für einen Bearbeitungsprozess (BP), bei dem ein Bearbeitungskopf (3) entlang einer Bearbeitungsbahn (X) über zumindest ein zu bearbeitendes Werkstück (W) geführt wird, und in Abhängigkeit der jeweiligen Position (x) entlang der Bearbeitungsbahn (X) bestimmte Bearbeitungsparameter (P'(x)) aus gespeicherten Bearbeitungsparametern (P(x)) anhand vorgegebener Bedingungen (B(x)) zur Bearbeitung des zumindest einen Werkstücks (W) ausgewählt werden, **dadurch gekennzeichnet, dass** Grenzwerte (P_{G}(x)) für die Bearbeitungsparameter (P(x)) für den durchzuführenden Bearbeitungsprozess (BP) ermittelt werden, und unter Berücksichtigung dieser Grenzwerte P_{G}(x) neue Bearbeitungsparameter (P''(x)) für den durchzuführenden Bearbeitungsprozess (BP) festgelegt werden.

2. Verfahren nach Anspruch 1, **dadurch gekennzeichnet, dass** vor der Auswahl der bestimmten Bearbeitungsparameter (P'(x)) für den durchzuführenden Bearbeitungsprozess (BP) ideale Bearbeitungsparameter (Pᵢ(x)) mit Testbearbeitungsprozessen an mehreren Testwerkstücken (14) entlang Testbearbeitungsbahnen (13) unter jeweils einer bestimmten Lage und Anordnung der Testwerkstücke (14) ermittelt und gespeichert werden, und die bestimmten Bearbeitungsparameter (P'(x)) an der jeweiligen Position (x) entlang der Bearbeitungsbahn (X) für den durchzuführenden Bearbeitungsprozess aus den gespeicherten idealen Bearbeitungsparameter (Pᵢ(x)) für die bestimmten Lagen und Anordnungen der Testwerkstücke (14)ermittelt werden.

3. Verfahren nach Anspruch 2, **dadurch gekennzeichnet, dass** die bestimmten Bearbeitungsparameter (P'(x)) an der jeweiligen Position (x) entlang der Bearbeitungsbahn (X) für den durchzuführenden Bearbeitungsprozess in Abhängigkeit der aktuellen Lage und Anordnung des zumindest einen Werkstücks (W) durch Interpolation der gespeicherten idealen Bearbeitungsparameter (Pᵢ(x)) ermittelt werden.

4. Verfahren nach einem der Ansprüche 1 bis 3, **dadurch gekennzeichnet, dass** die Grenzwerte (P_{G}(x)) für die Bearbeitungsparameter (P(x)) eingegeben und vorzugsweise gespeichert werden.

5. Verfahren nach einem der Ansprüche 1 bis 4, **dadurch gekennzeichnet, dass** die Grenzwerte (P_{G}(x)) für die Bearbeitungsparameter (P(x)) vor der Durchführung des Bearbeitungsprozesses (BP) automatisch ermittelt und vorzugsweise gespeichert werden, beispielsweise durch virtuelles Durchlaufen des Bearbeitungsprozesses (BP).

6. Verfahren nach einem der Ansprüche 1 bis 5, **dadurch gekennzeichnet, dass** die Grenzwerte (P_{G}(x)) für die Bearbeitungsparameter (P(x)) während der Durchführung des Bearbeitungsprozesses (BP) automatisch ermittelt und vorzugsweise gespeichert werden.

7. Verfahren nach einem der Ansprüche 1 bis 6, **dadurch gekennzeichnet, dass** zusätzlich zu den Grenzwerten (P_{G}(x)) für die Bearbeitungsparameter (P(x)) alternative Bearbeitungsparameter (Pₐ(x)) gespeichert werden.

8. Verfahren nach einem der Ansprüche 1 bis 7, **dadurch gekennzeichnet, dass** eine Warnung ausgegeben und bzw. oder eine Information gespeichert wird, wenn ein bestimmter Bearbeitungsparameter (P'(x)) für den durchzuführenden Bearbeitungsprozess (BP) sich einem Grenzwert (P_{G}(x)) für die Bearbeitungsparameter (P(x)) annähert oder einen Grenzwert (P_{G}(x)) für die Bearbeitungsparameter (P(x)) erreicht.

9. Verfahren nach einem der Ansprüche 1 bis 8, **dadurch gekennzeichnet, dass** bei Annähern oder Erreichen zumindest eines Grenzwerts (P_{G}(x)) für einen Bearbeitungsparameter (P(x)) als bestimmter Bearbeitungsparameter (P'(x)) für den durchzuführenden Bearbeitungsprozess (BP) dieser zumindest eine Grenzwert (P_{G}(x)) für einen Bearbeitungsparameter (P(x)) oder angenäherte Grenzwert (P_{G}(x)) für einen Bearbeitungsparameter (P(x)) oder gespeicherte alternative Bearbeitungsparameter (Pₐ(x)) als neuer Bearbeitungsparameter (P''(x)) für den durchzuführenden Bearbeitungsprozess (BP) ausgewählt wird.

10. Verfahren nach einem der Ansprüche 1 bis 9, **dadurch gekennzeichnet, dass** die Grenzwerte (P_{G}(x)) für die Bearbeitungsparameter (P(x)) bei der Auswahl der bestimmten Bearbeitungsparameter (P'(x)) für den durchzuführenden Bearbeitungsprozess (BP) vor dem Bearbeitungsprozess (BP) berücksichtigt werden.

11. Verfahren nach Anspruch 10, **dadurch gekennzeichnet, dass** der durchzuführende Bearbeitungsprozess (BP) mit den bestimmten Bearbeitungsparametern (P'(x)) simuliert wird und die neuen Bearbeitungsparameter (P''(x)) für den durchzuführenden Bearbeitungsprozess (BP) festgelegt werden.

12. Verfahren nach einem der Ansprüche 1 bis 9, **dadurch gekennzeichnet, dass** die Grenzwerte (P_{G}(x)) für die Bearbeitungsparameter (P(x)) bei der Auswahl der bestimmten Bearbeitungsparameter (P'(x)) für den durchzuführenden Bearbeitungsprozess (BP) während des Bearbeitungsprozesses (BP) berücksichtigt werden und die neuen Bearbeitungsparameter (P''(x)) für den durchzuführenden Bearbeitungsprozess (BP) festgelegt werden.

13. Verfahren nach einem der Ansprüche 10 bis 12, **dadurch gekennzeichnet, dass** der Bearbeitungsprozess (BP) gestoppt wird, wenn die neuen Bearbeitungsparameter (P''(x)) um einen vorgegebenen Faktor (F) und bzw. oder einen vorgegebenen Absolutbetrag von den bestimmten Bearbeitungsparametern (P'(x)) abweichen.

14. Verfahren nach Anspruch 13, **dadurch gekennzeichnet, dass** bei Abweichung der neuen Bearbeitungsparameter (P''(x)) um den vorgegebenen Faktor (F) und bzw. oder den vorgegebenen Absolutbetrag von den bestimmten Bearbeitungsparametern (P'(x)) eine Warnung ausgegeben und bzw. oder eine Information gespeichert wird.

15. Vorrichtung (1) zur Bearbeitung eines Werkstücks (W) mit einem Bearbeitungskopf (3) entlang einer Bearbeitungsbahn (X) mit bestimmten Bearbeitungsparametern (P'(x)), welche zur Durchführung des Verfahrens nach einem der Ansprüche 1 bis 14 ausgebildet ist.

## Claims

1. A method for the automatic determination of machining parameters (P' (x)) for a machining process (BP), in which a machining head (3) is guided along a machining path (X) over at least one workpiece (W) to be machined, and, depending on the respective position (x) along the machining path (X), certain machining parameters (P' (x)) are selected from stored machining parameters (P(x)) on the basis of predefined conditions (B(x)) for machining the at least one workpiece (W), **characterized in that** limit values (P_{G}(x)) for the machining parameters (P(x)) are determined during the machining process (BP) to be performed, and new machining parameters (P''(x)) for the machining process (BP) to be performed are specified by taking these limit values (P_{G}(x)) into consideration.

2. The method according to claim 1, **characterized in that** prior to the selection of the certain machining parameters (P' (x)) for the machining process (BP) to be performed, ideal machining parameters (Pᵢ(x)) are determined and stored by means of test machining processes on several test workpieces (14) along test machining paths (13), in each case with a certain position and arrangement of the test workpieces (14), and the certain machining parameters (P' (x)) are determined at the respective position (x) along the machining path (X) for the machining process to be performed from the stored ideal machining parameters (Pᵢ(x)) for the certain positions and arrangements of the test workpieces (14).

3. The method according to claim 2, **characterized in that** the certain machining parameters (P' (x)) at the respective position (x) along the machining path (X) for the machining process to be performed depending on the current position and arrangement of the at least one workpiece (W) are determined by means of interpolation of the stored ideal machining parameters (Pᵢ(x)).

4. The method according to one of claims 1 to 3, **characterized in that** the limit values (P_{G}(x)) for the machining parameters (P(x)) are input and are preferably stored.

5. The method according to one of claims 1 to 4, **characterized in that** the limit values (P_{G}(x)) for the machining parameters (P(x)) are determined automatically and are preferably stored prior to performing the machining process (BP), for example by virtually passing through the machining process (BP).

6. The method according to one of claims 1 to 5, **characterized in that** the limit values (P_{G}(x)) for the machining parameters (P(x)) are determined automatically and are preferably stored while performing the machining process (BP).

7. The method according to one of claims 1 to 6, **characterized in that** in addition to the limit values (P_{G}(x)) for the machining parameters (P(x)), alternative machining parameters (Pₐ(x)) are stored.

8. The method according to one of claims 1 to 7, **characterized in that** a warning is output and/or information is stored, respectively, when a certain machining parameter (P' (x)) for the machining process (BP) to be performed approaches a limit value (P_{G}(x)) for the machining parameters (P(x)) or reaches a limit value (P_{G}(x)) for the machining parameters (P(x)).

9. The method according to one of claims 1 to 8, **characterized in that** when approaching or reaching at least one limit value (P_{G}(x)) for a machining parameter (P(x)) as certain machining parameter (P' (x)) for the machining process (BP) to be performed, this at least one limit value (P_{G}(x)) is selected for a machining parameter (P(x)) or approached limit value (P_{G}(x)) for a machining parameter (P(x)) or stored alternative machining parameter (Pₐ(x)) as new machining parameter (P"(x)) for the machining process (BP) to be performed.

10. The method according to one of claims 1 to 9, **characterized in that** when selecting the certain machining parameters (P' (x)) for the machining process (BP) to be performed, the limit values (P_{G}(x)) for the machining parameters (P(x)) are taken into consideration prior to the machining process (BP).

11. The method according to claim 10, **characterized in that** the machining process (BP) to be performed is simulated with the certain machining parameters (P' (x)), and the new machining parameters (P''(x)) are specified for the machining process (BP) to be performed.

12. The method according to one of claims 1 to 9, **characterized in that** the limit values (P_{G}(x)) for the machining parameters (P(x)) are taken into consideration during the machining process (BP) when selecting the certain machining parameters (P' (x)) for the machining process (BP) to be performed, and the new machining parameters (P''(x)) for the machining process (BP) to be performed are specified.

13. The method according to one of claims 10 to 12, **characterized in that** the machining process (BP) is stopped when the new machining parameters (P''(x)) differ from the certain machining parameters (P' (x)) by a predefined factor (F) and/or by a predefined absolute value, respectively.

14. The method according to claim 13, **characterized in that** when the new machining parameters (P''(x)) deviate from the certain machining parameters (P' (x)) by the predefined factor (F) and/or by the predefined absolute value, respectively, a warning is output and/or information is stored, respectively.

15. A device (1) for machining a workpiece (W) by means of a machining head (3) along a machining path (X) with certain machining parameters (P' (x)), which are formed for carrying out the method according to one of claims 1 to 14.

## Revendications

1. Procédé pour la détermination automatique de paramètres de traitement (P'(x)) pour un processus de traitement (PT), dans lequel une tête de traitement (3) est guidée le long d'une trajectoire de traitement (X) sur au moins une pièce à traiter (W), et en fonction de la position respective (x) le long de la trajectoire de traitement (X), certains paramètres de traitement (P'(x)) sont sélectionnés à partir de paramètres de traitement stockés (P(x)) sur la base de conditions prédéfinies (B(x)) pour le traitement de l'au moins une pièce à traiter (W), **caractérisé en ce que** des valeurs limites (P_{G}(x)) pour les paramètres de traitement (P(x)) sont déterminées pour le processus de traitement (PT) à exécuter, et de nouveaux paramètres de traitement (P''(x)) sont définis pour le processus de traitement (PT) à exécuter en tenant compte de ces valeurs limites P_{G}(x).

2. Procédé selon la revendication 1, **caractérisé en ce que**, avant la sélection des paramètres de traitement déterminés (P'(x)) pour le processus de traitement (PT) à exécuter, des paramètres de traitement idéaux (Pᵢ(x)) sont déterminés et stockés avec des processus de traitement de test sur plusieurs pièces de test (14) le long de trajectoires de traitement de test (13) dans chaque cas sous une position et un arrangement spécifiques des pièces de test (14), et les paramètres de traitement déterminés (P'(x)) à la position respective (x) le long de la trajectoire de traitement (X) pour le processus de traitement à exécuter sont déterminés à partir des paramètres de traitement idéaux stockés (Pᵢ(x)) pour les positions et arrangements déterminés des pièces de test (14).

3. Procédé selon la revendication 2, **caractérisé en ce que** les paramètres de traitement déterminés (P'(x)) à la position respective (x) le long de la trajectoire de traitement (X) pour le processus de traitement à exécuter sont déterminés en fonction de la position et de l'arrangement actuels de l'au moins une pièce à traiter (W) par interpolation des paramètres de traitement idéaux stockés (Pᵢ(x)).

4. Procédé selon l'une des revendications 1 à 3, **caractérisé en ce que** les valeurs limites (P_{G}(x)) pour les paramètres de traitement (P(x)) sont entrées et de préférence stockées.

5. Procédé selon l'une des revendications 1 à 4, **caractérisé en ce que** les valeurs limites (P_{G}(x)) pour les paramètres de traitement (P(x)) sont déterminées automatiquement avant l'exécution du processus de traitement (PT) et de préférence stockées, par exemple en parcourant virtuellement le processus de traitement (PT).

6. Procédé selon l'une des revendications 1 à 5, **caractérisé en ce que** les valeurs limites (P_{G}(x)) pour les paramètres de traitement (P(x)) sont déterminées automatiquement pendant l'exécution du processus de traitement (PT) et de préférence stockées.

7. Procédé selon l'une des revendications 1 à 6, **caractérisé en ce que** des paramètres de traitement alternatifs (Pₐ(x)) sont stockés en plus des valeurs limites (P_{G}(x)) pour les paramètres de traitement (P(x)).

8. Procédé selon l'une des revendications 1 à 7, **caractérisé en ce qu'**un avertissement est émis et/ou une information est stockée lorsqu'un paramètre de traitement déterminé (P'(x)) pour le processus de traitement (PT) à exécuter s'approche d'une valeur limite (P_{G}(x)) pour les paramètres de traitement (P(x)) ou atteint une valeur limite (P_{G}(x)) pour les paramètres de traitement (P(x)).

9. Procédé selon l'une des revendications 1 à 8, **caractérisé en ce que** lors de l'approche ou de l'atteinte d'au moins une valeur limite (P_{G}(x)) pour un paramètre de traitement (P(x)) comme paramètre de traitement déterminé (P'(x)) pour le processus de traitement (PT) à exécuter, cette au moins une valeur limite (P_{G}(x)) pour un paramètre de traitement (P(x)) ou valeur limite approchée (P_{G}(x)) pour un paramètre de traitement (P(x)) ou paramètres de traitement alternatifs stockés (Pₐ(x)) est sélectionnée comme nouveau paramètre de traitement (P''(x)) pour le processus de traitement (PT) à exécuter.

10. Procédé selon l'une des revendications 1 à 9, **caractérisé en ce que** les valeurs limites (P_{G}(x)) pour les paramètres de traitement (P(x)) sont prises en compte lors de la sélection des paramètres de traitement déterminés (P'(x)) pour le processus de traitement (PT) à exécuter avant le processus de traitement (PT).

11. Procédé selon la revendication 10, **caractérisé en ce que** le processus de traitement (PT) à exécuter est simulé avec les paramètres de traitement déterminés (P'(x)) et les nouveaux paramètres de traitement (P''(x)) pour le processus de traitement (PT) à exécuter sont définis.

12. Procédé selon l'une des revendications 1 à 9, **caractérisé en ce que** les valeurs limites (P_{G}(x)) pour les paramètres de traitement (P(x)) sont prises en compte lors de la sélection des paramètres de traitement déterminés (P'(x)) pour le processus de traitement (PT) à exécuter pendant le processus de traitement (PT) et les nouveaux paramètres de traitement (P''(x)) pour le processus de traitement (PT) à exécuter sont définis.

13. Procédé selon l'une des revendications 10 à 12, **caractérisé en ce que** le processus de traitement (PT) est arrêté lorsque les nouveaux paramètres de traitement (P''(x)) diffèrent des paramètres de traitement déterminés (P'(x)) d'un facteur prédéfini (F) et/ou d'une valeur absolue prédéfinie.

14. Procédé selon la revendication 13, **caractérisé en ce que**, en cas d'écart des nouveaux paramètres de traitement (P''(x)) du facteur prédéfini (F) et/ou de la valeur absolue prédéfinie par rapport aux paramètres de traitement déterminés (P'(x)), un avertissement est émis et/ou une information est stockée.

15. Dispositif (1) pour le traitement d'une pièce à traiter (W) avec une tête de traitement (3) le long d'une trajectoire de traitement (X) avec des paramètres de traitement déterminés (P'(x)), qui est conçu pour mettre en œuvre le procédé selon l'une des revendications 1 à 14.
